# EUROPEAN PATENT APPLICATION

(11) **EP 4 436 312 A1**
(43) Date of publication of application: **25.09.2024**
(21) Application number: 23163975.8
(22) Date of filing: 24.03.2023
(51) Int. Cl.: H05B 3/34, B29C 63/00

(54) **ELECTRICAL HEATING UNIT FOR HEATING A HEAT SHRINK COVER, ELECTRICAL HEATING SYSTEM, INSTALLATION SYSTEM, AND MANUFACTURING METHOD**

(71) Applicant: TE Connectivity Solutions GmbH, 8200 Schaffhausen (CH)
(72) Inventor: Heindl, Christian, 8200 Schaffhausen (CH); Kehl, Ladislaus, 8200 Schaffhausen (CH)
(74) Representative: Grünecker Patent- und Rechtsanwälte PartG mbB

(57) **Abstract**

The present disclosure relates to an electrical heating unit for heating a heat shrink cover, an electrical heating system, an installation system, and a manufacturing method for fabricating the heating unit. The electrical heating unit (100) comprises an electrical heating element (102) operable to generate heat from electrical input energy, and a carrier unit (108), on which the electrical heating element (102) is assembled, wherein the carrier unit (108) has a longitudinal axis (104) and is attachable to the heat shrink cover (118), wherein the carrier unit (108) has a corrugated shape, formed by a plurality of ridges (110) extending along the longitudinal axis (104) of the carrier unit (108).

## Description

The present disclosure relates to an electrical heating unit for heating a heat shrink cover, an electrical heating system, an installation system, and a manufacturing method for fabricating the heating unit.

For instance, the present invention is usable for installing medium voltage (MV) joint bodies for 12 to 42 kV, but may also be advantageous for covering other components and be used in other voltage classes. In particular, the present invention may be employed for installing heat shrink joint bodies and rejacketing sleeves as well as in principle all kinds of heat shrink sleeves such as terminations and cover sleeves as well as molded products like sheds, breakouts, boots and caps. The present invention further relates to an electrical heating system and an installation system for installing a heat shrink cover torchlessly.

The majority of existing MV joints comprise heat shrink joint bodies together with mastics, stress control sleeves, or patches underneath. On the outside of the heat shrink bodies, conductive meshes are taped or sockets get positioned, and the shield wires or tape shields of the cables are connected from one end of the joint to the other. Finally, the entire connection area is usually covered by a heat shrink outer protection sleeve, the so-called rejacketing sleeve.

Heat shrink components in the sense of the present invention relate to articles that are made from material which shrinks from an expanded state into a shrunk state with a much smaller diameter by applying a sufficient amount of heat. Heat shrink components are widely spread as joint sleeves or other cable accessories.

The present invention utilizes a heat-recoverable article (an independently dimensionally heat-unstable article) as a heat shrink layer. In general, such an article is made of a material capable of having the property of elastic or plastic memory imparted thereto which is heated to a certain temperature and distorted e. g. under internal pressure to a configuration different from its normal configuration and then cooled while kept under pressure. If the article is made of a material which is wholly or partly crystalline, is at least partly cross-linked in the amorphous areas, and is distorted at a temperature at or above the crystalline melting point of the material, the article will have elastic memory. An article with elastic memory will not recover towards its original configuration until it is again heated at least to its crystalline melting temperature. If the article is made of a non-crystalline material, it is heated to a temperature at which the article can be distorted by pressure, and the distorted article then has the property of plastic memory. Of course, the heat shrink layer can be fabricated from any suitable material, as this is known to a person skilled in the art. Moreover, also multilayer arrangements that additionally comprise elastic and/or electrically semi-conductive and conductive layers are encompassed by the present invention.

The heat shrink cover which is installed according to the present invention, is intended to be used with voltages above approximately 1 kV. In particular, the term high-voltage in the context of the present invention is intended to comprise the usual nominal voltage ranges of power distribution, namely medium voltage, MV, (about 3 kV to about 42 kV), and transmission, namely high-voltage, HV, (about 52 kV to about 345 kV), and also extra high-voltage (up to presently about 765 kV). Of course, also higher voltages may be considered in the future. These voltages may be direct current (DC) or alternating current (AC) voltages. In the following, the term "high-voltage cable" is intended to signify a cable that is suitable for carrying electric current of more than about 1 A at a voltage above approximately 1 kV. Accordingly, the term "high-voltage accessory" is intended to signify a device that is suitable for interconnecting high-voltage facilities and/or high-voltage cables. In particular, a high-voltage accessory may either be an end termination or a cable joint.

The present invention is also applicable to the so-called "low-voltage", LV, range that relates to voltages below 1 kV. The principles of the present invention may further be applied to heat shrink products used for electronic applications, piping and construction applications and further more.

The expression "sleeve" according to the present invention is intended to signify straight tube shaped sleeves as well as differently shaped covers for branch joints, elbows, bends, breakouts, wrap-arounds, sheds, and the like.

In order to install heat shrink products for LV, MV, and HV applications, typically open flames, such as gas torches, are used. However, from the stand point of safety at work, the use of open flames is disadvantageous. Furthermore, it is desired to reduce the amount of energy and the time needed for installing products. In some cases it is also desired to reduce the amount of heat generated during installation. A major aim is to reduce the impact of jointer skills on the result of heat shrink installations. An automated installation is highly desirable. Consequently, it is desirable to use other energy sources than open flames, preferably electrical energy. In particular, it is desirable that the joint body and the rejacketing sleeve can be installed torchlessly in one process without further interaction of a cable jointer.

For instance from the European patent EP 3429042 B1 or the published European patent application EP 4040618 A1, a method for installing a heat shrink cover around a component to be covered is known, wherein electrical heating systems are used instead of open flames. While these heating systems have many advantages over the use of open flames, it could be shown that in some cases the electrical heating unit was not able to mechanically follow the outer surface of the shrinking heat recoverable article.

The object underlying the present disclosure is to provide an improved electrical heating unit with its manufacturing method, an electrical heating system, and an installation system for installing a heat shrink cover onto a component to be covered, which alleviate or overcome the disadvantages of conventional installation methods and provide a significant reduction of installation time, manufacturing costs and the complexity, at the same time guaranteeing a safe covering of the component to be covered, in particular by overcoming the dependency on jointer skills by implementing an automated installation. Furthermore, it is an object of the present disclosure to provide an electrical heating unit which is usable with a wide range of heat shrink cover sizes.

This object is solved by the subject matter of the independent claims. Advantageous embodiments of the present invention are the subject matter of the dependent claims.

The present invention is based on the finding that by deforming the planar electrical heating unit so that it has an undulated cross-sectional shape the electrical heating unit adapts more easily to the outer surface of the shrinking heat shrink cover. Thus, the heat transmission remains maximal during the complete heating process. Furthermore, the assembly around a cylindrical heat recoverable article is facilitated and one size of the electrical heating unit is adaptable to a larger range of diameters of the heat shrink cover.

In particular, an electrical heating unit for heating a heat shrink cover comprises an electrical heating element operable to generate heat from electrical input energy, and a carrier unit, on which the electrical heating element is assembled, wherein the carrier unit has a longitudinal axis and is attachable to the heat shrink cover, wherein the carrier unit has a corrugated shape, formed by a plurality of ridges extending along the longitudinal axis of the carrier.

According to an advantageous example, the electrical heating element comprises at least one heating wire. In case of installing MV joints using heat shrink joint bodies and heat shrink sleeves as rejacketing sleeves, the average power density of the power delivered by the electrical heating unit may be between 0.1 W/cm² and 4.0 W/cm², preferably between 0.2 W/cm² and 0.8 W/cm².

To heat-up the electrical heating unit with up to 65 Volts to temperatures that allow for a quick and reasonably fast installation process of about 10 to 40 minutes for a standard 24 kV inline joint, copper conductor wires or any other suitable electrical conductor wires may be used as heating wires. The heating wires can be arranged on a flexible carrier material, so that the heating unit can be wrapped around the heat shrink cover and can easily be removed after the installation process has been completed.

The carrier material for the heating wires may be polyimide (PI) or polyethylene naphthalate (PEN) film with adhesive material. The thickness of the film may be in the magnitude of 10 microns but less than 80 microns. The electrical heating unit may for instance comprise two polymeric films, one or both of them covered with adhesive. However, it is also possible to use a combination of a polymer film with adhesive material and at least one film having a higher thermal conductivity than the polymer, such as for instance aluminum. In case the carrier material is electrically conductive, the heater wires may be covered with an electric insulation. The heater wires may be laid in meanders with spacing of the conductors of at least 2.5 mm to avoid delamination of the films before or during installation process.

Exemplarily, the at least one heating wire is formed by a copper conductor with a diameter between 0.1 mm and 1.0 mm.

Further, the carrier unit may comprise a flexible electrically insulating plastic foil, preferably comprising polyimide.

According to an advantageous example, the carrier unit may comprise a first electrically insulating sheet and a second electrically insulating sheet stacked on the first electrically insulating sheet, the first and second electrically insulating sheets enclosing the electrical heating element. In this case, the electrical heating element may at least partly be embedded in an adhesive layer.

During operation, the electrical heating unit may be wrapped around the heat shrink cover, forming a cylindrical shape around the longitudinal axis. Thus, a particularly efficient heat transfer may be achieved.

According to an advantageous example, the ridges are regularly alternating with grooves to form a sinusoidal cross-section. Thereby, the electrical heating unit may be adapted efficiently to the outer circumference of the heat shrink article to be heated. Any other cross-sectional shapes, e. g. triangular zigzag, rectangular or other angularly bent cross-sections are of course also possible. Moreover, the ridges and grooves may also be distributed irregularly along the heater.

The present disclosure also provides an electrical heating system for heating a heat shrink cover, wherein the electrical heating system comprises an electrical heating unit according to the present disclosure, and an electronic control unit connected to the electrical heating unit. Advantageously, the control unit control unit is provided for controlling said electrical heating unit to provide heat during a heat recovery step for heat recovering said inner heat shrink sleeve. Advantageously, said control unit outputs a supply voltage, and said heating unit is provided with a plug connector for being connected with said control unit during the heat recovery step.

The present invention further relates to an installation system comprising an installation kit and a control unit for controlling said electrical heating unit to provide heat during a heat recovery step for heat recovering said inner heat shrink sleeve.

Further, the present disclosure also relates to a method of fabricating an electrical heating unit for heating a heat shrink cover, the method comprising the following steps:
providing a planar flexible precursor of the carrier unit, wherein the electrical heating element is assembled on the precursor, wherein the carrier unit has a longitudinal axis,
deforming the planar flexible precursor carrier unit by applying mechanical pressure, so that the resulting carrier unit has a corrugated shape, formed by a plurality of ridges extending along the longitudinal axis of the carrier unit.

Advantageously, the step of deforming the carrier unit comprises passing the planar flexible precursor of the carrier unit between a first and a second calender roll, which are rotated in opposite directions.

For instance, each of the calender rolls may have a corrugated outer contour with longitudinal ridges and grooves, the ridges of the first calender roll engaging with the grooves of the second calender roll during rotation of the rolls.

Advantageously, each of the calender rolls has an outer contour with a zigzag cross-sectional shape, adjacent sidewalls of the outer contour including angles of between 40° and 140° with each other.

As mentioned above, after passing through the first and second calender roll, the ridges of the electrical heating unit are regularly alternating with grooves to form a sinusoidal cross-section.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a schematic perspective view of an electrical heating unit according to a first example;
- **FIG. 2**: is a schematic perspective view of the electrical heating unit of Fig. 1 before being attached to a heat shrink cover;
- **FIG. 3**: is a schematic perspective view of the electrical heating unit of Fig. 1 attached to a heat shrink cover;
- **FIG. 4**: is a further view of the electrical heating unit of Fig. 1 wrapped around a heat shrink cover;
- **FIG. 5**: is a planar layout of the electrical heating unit according to an advantageous example;
- **FIG. 6**: is a detail of the layout shown in Fig. 5;

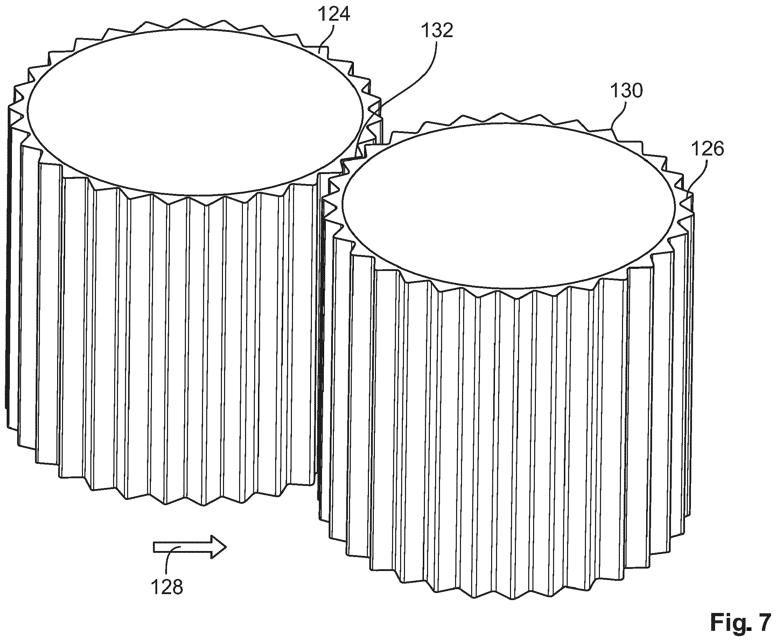

- **FIG. 7**: is a perspective view of a pair of calender rolls according to an advantageous example;
- **FIG. 8**: schematically illustrates a cable joint with an inner and an outer heat shrink sleeve and an electrical heating unit, before the heating is performed.

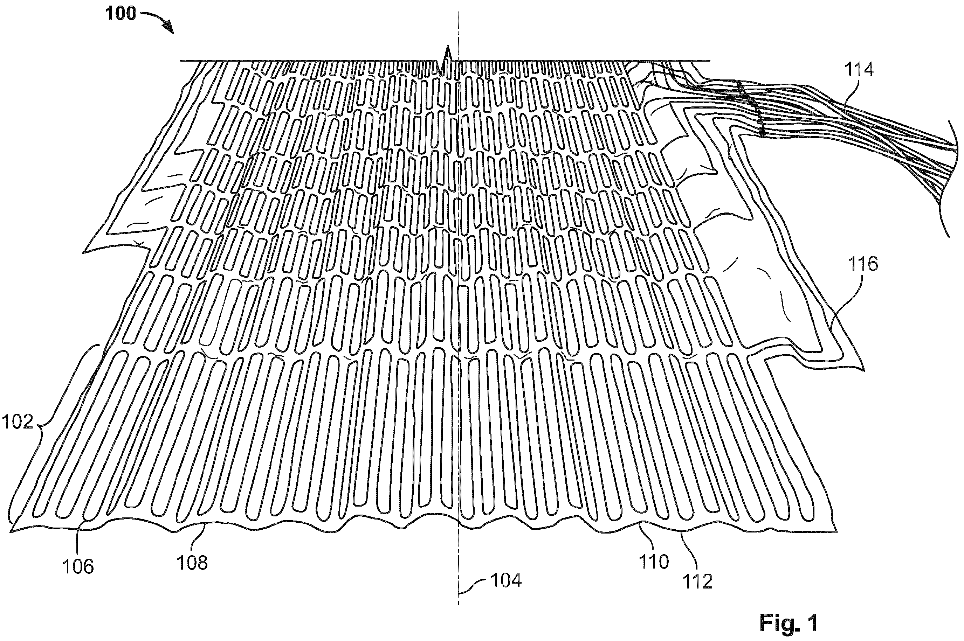

The present invention will now be explained in more detail with reference to the Figures and firstly referring to Fig. 1.

Fig. 1 shows a perspective view of an electrical heating unit 100 according to an example of the present disclosure. The electrical heating unit 100 comprises a plurality of electrical heating elements 102 which are arranged adjacently along a longitudinal axis 104. The electrical heating elements 102 comprise for instance copper conductors (or any other suitable electrical conductor wires) which are used as heating wires 106. The heating wires 106 are arranged on a flexible, in particular bendable, carrier 108, so that the heating unit 100 can be wrapped around a heat shrink cover (see the following Figures) to be heated and can easily be removed after the installation process has been completed.

The material of the carrier 108 for the heating wires 106 may be polyimide (PI) or polyethylene naphthalate (PEN) film with an adhesive material. The thickness of the film may be in the magnitude of 10 microns but less than 80 microns. In the shown example, the electrical heating unit 100 comprises as a carrier 108 two polymeric films, one or both of them covered with adhesive. One or both of the polymeric films may also be metal laminated with e. g. aluminum. The heating wires 106 are laid in meanders with spacing of the conductors of at least 2.5 mm to avoid delamination of the films before or during the installation process.

According to the present disclosure, before being mounted around a heat shrink cover, the electrical heating unit 100 is not completely planar, but has an undulating three-dimensional shape with corrugations extending along the longitudinal axis 104. As shown in Fig. 1, regularly alternating ridges 110 and depressions (also referred to as grooves) 112 form an essentially sinusoidal cross-section. This corrugated three-dimensional shape provides a certain degree of stretchability and resilience in a direction across to the longitudinal axis 104. Thus, the electrical heating unit 100 is able to adapt its diameter to heat shrink products of various sizes and also follows the outline of the shrinking heat shrink component more closely during the heating operation. The heating efficiency is thereby enhanced significantly.

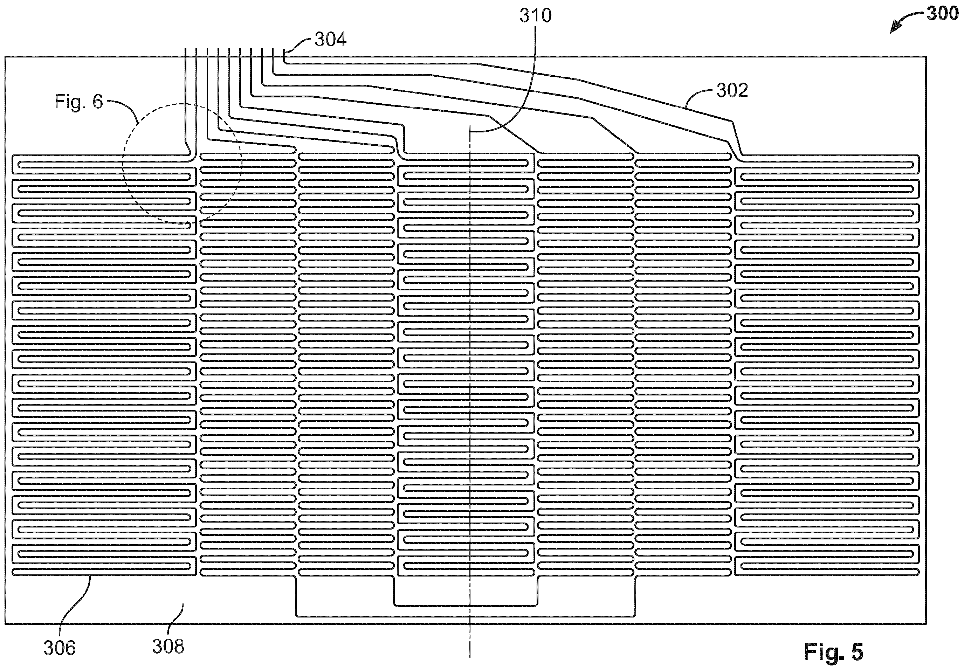

As will become more apparent from Fig. 5, a plurality of electrical heating elements 102 is provided which may have a different longitudinal dimension in a direction along the longitudinal axis 104. The electrical heating elements 102 may either be directly interconnected within the carrier 108, or their supply lines 116 are connected to external leads 114. The external leads 114 may be connected to an electrical plug connector (not shown in Fig. 1).

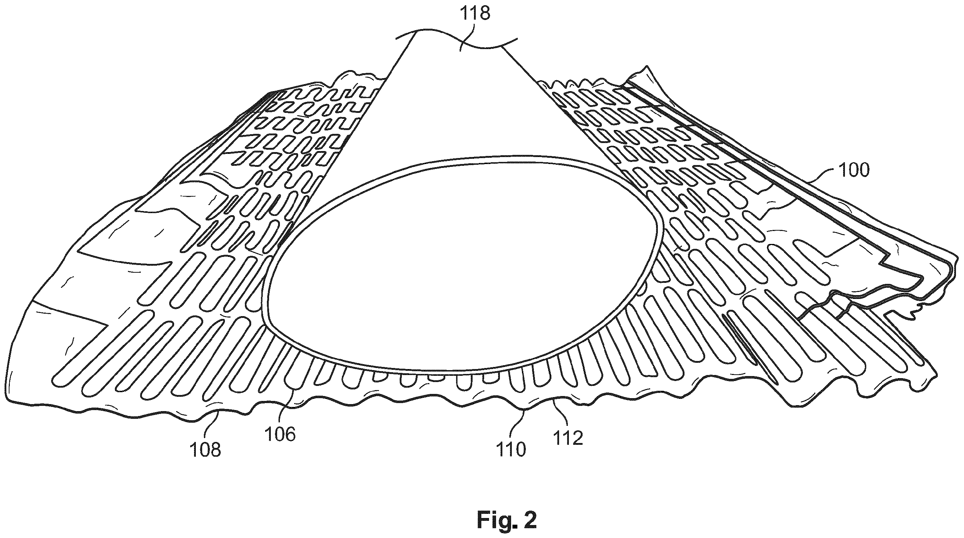

Fig. 2 shows the electrical heating unit 100 before being wrapped around a heat shrink cover 118 which is to be heated and shrunk by energizing the electrical heating unit 100. In operation, the heat shrink cover is of course arranged to cover an electrical component such as an electrical connector, before the electrical heating unit 100 is energized.

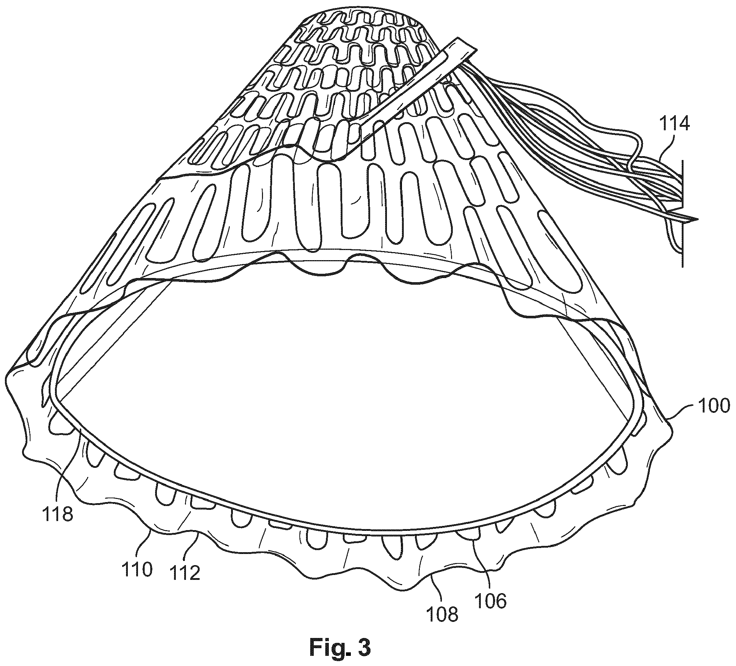

As shown in Fig. 3, the electrical heating unit 100 is then wrapped around the heat shrink cover 118. Depending on the diameter of the heat shrink cover 118, the electrical heating unit 100 is attached with more or less overlap when closing the longitudinal open edges around the heat shrink cover 118. Furthermore, the electrical heating unit 100 may be wrapped around the heat recoverable heat shrink cover 118 with a slight stretching in the radial direction (i. e. across the longitudinal axis). Thus, the undulating shape provides radial resiliency and in operation the electrical heating unit 100 is able to closely follow the radial shrinking of the heat shrink cover 118 and always stay in touch with the surface of the heat shrink cover until the installation process is finally completed.

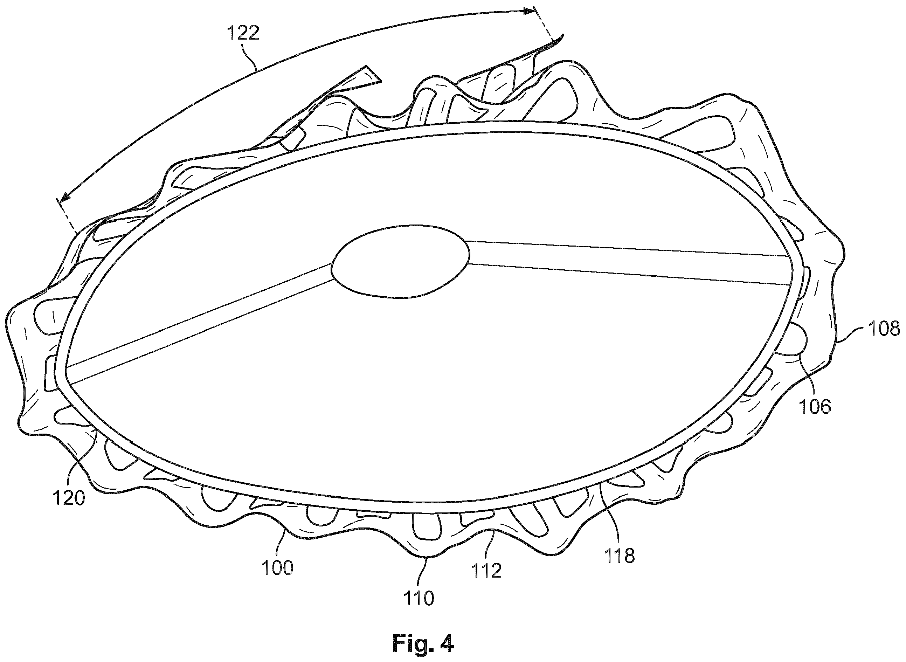

Fig. 4 shows a slightly rotated view of the electrical heating unit 100 wrapped around the heat shrink cover 118 of Fig. 3. As can be seen from this Figure, the three-dimension form of the electrical heating unit 100 has a sinusoidal cross-section and closely follows the outer surface 120 of the heat shrink cover 118.

In an overlap region 122 the ridges of one side of the overlapping edges engage with the grooves of the other side, so that the electrical heating unit 100 can be kept in the state shown in Figure 4 without having to exert high forces.

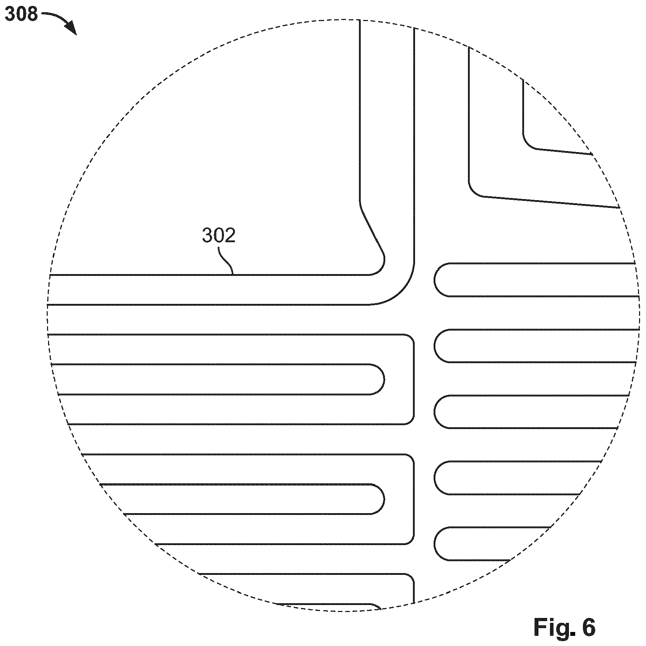

Fig. 5 and 6 illustrate a planar layout of an exemplary planar heating unit 300 before the corrugation is added and before being formed into a cylindrical shape. The planar electrical heating unit 300 comprises seven heating elements 306. The heating elements 306 are formed by wires 302.

The heating elements 306 are arranged symmetrically with respect to a symmetry axis 310 which will be ring shaped when the heating unit 300 is wrapped around a heat shrink cover. As shown in Fig. 5, the central heating element and the two peripheral heating elements are structured as separate heating elements with two separate connecting elements each. In contrast thereto, the heating elements adjacent to the central heating element are connected to each other serially and the two heating elements adjacent to the peripheral heating elements are serially interconnected. Thus, the amount of connecting elements at the connector 304 can be reduced, taking into account that the inner heating elements are always operated symmetrically. Another reason for this is to generate narrow heater elements which have only half of the length of the heater wire. Putting these two in series generates heaters with a typical length of wire and typical process parameters.

Fig. 6 is a detail of Fig. 6 illustrating the arrangement of the wires 302 on the substrate 308. In the exemplary embodiment, the wires 302 are formed by conductors, e. g. copper conductors, with a diameter between 0.1 mm and 1.0 mm. The substrate 308 may for instance by formed from polyimide (PI) or polyethylene naphthalate (PEN) film with adhesive material. The thickness of the film may be in the magnitude of 10 microns but less than 80 microns. The heating unit 300 may comprise two polymeric films, one or both of them covered with adhesive. One or both of the polymeric films may also be metal laminated with e. g. aluminum, or be formed from a thermally conductive material.

In order to create an undulated three-dimensional shape of the electrical heating unit 100 as shown in Fig. 1 to 4, the planar heating unit 300 of Fig. 5 and 6 is for instance passed between two opposing rotating calender rolls 124, 126 along the direction indicated by the arrow 128. The first and second calender rolls 124, 128 rotate in opposing directions when the heating unit passes therebetween.

The first and second calender rolls 124, 128 have elongated projections 130 with an essentially triangular cross-section which engage with each other during the rotation of the calender rolls 124. A gap 132 is provided, which is large enough to let the wires of the heating unit pass undamaged, but still allows to exert sufficient pressure that the carrier of the heating unit remains permanently deformed.

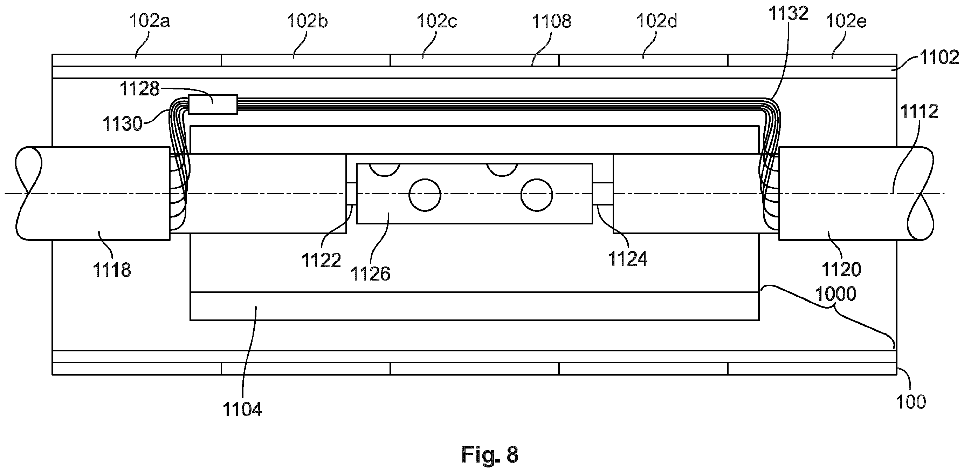

Figure 8 illustrates an example of how to use the corrugated electrical heating unit 100 advantageously for heat shrinking a composite cover 1000.

The cover 1000 comprises an outer sleeve 1102 and an inner sleeve 1104. The example explained in the following relates to the installation of at least two sleeves, wherein the inner sleeve is a heat shrink sleeve, by heating the outermost sleeve from its outside. A special application is the heat shrink installation of MV joints with electrical heating systems. For instance, the outer sleeve 1102 is a rejacketing sleeve and the inner sleeve 1104 is a joint body, both sleeves being separate items and being fabricated with at least one heat shrink layer. Both sleeves are being positioned independently from each other in the cable jointing area. According to this example, both sleeves are being installed in one installation sequence, in other words in one heating sequence, without the interaction of a jointer. At the end of the installation process, the electric heating unit 100 and all other items needed for the installation process can be removed.

As shown in Fig. 8, the cover 1000 comprises an electrical heating unit 100 which is arranged on the outer surface 1108 of the outer sleeve 1002. The heating unit 100 provides all the thermal energy required to shrink the outer and the inner sleeves 1102, 1104. In the example shown in Fig. 8, both sleeves 1102, 1104 comprise at least one heat shrink layer that allows the sleeve to recover to a smaller diameter when being heated up to the recovery temperature.

Advantageously, the outer sleeve 1102 is longer than the inner sleeve 1104 in the longitudinal direction along the middle axis 1112. Thus, a reliable sealing of the connection which is covered by the first and second sleeves 1102, 1104 can be achieved. However, the first and second sleeves 1102, 1104 may of course also have the same length.

In a first step, the inner sleeve 1104 and the outer sleeve 1102 are arranged to encompass a component to be covered 1114. The heating unit 100 is arranged on the outer surface of the outer sleeve 1102. The electric heating unit 100 may have a plurality of heating elements 102a-102e. These heating elements 102 may be powered separately, so that the underlying regions may be heated differently along the longitudinal axis 1112, or connected serially to form pairs of heating elements that are energized together.

Fig. 8 illustrates the exemplary arrangement, where an MV cable jointing area is covered by a joint body forming an inner sleeve 1104 and a rejacketing sleeve forming an outer sleeve 1102. Both sleeves 1102, 1104 are heat recoverable, i. e. they comprise at least one heat shrink layer. According to this embodiment, a first cable end 1118 is connected to a second cable end 1120. A first main conductor 1122 and a second main conductor 1124 are connected to each other by means of an electrical connector 1126 as this is known.

An electrical shield connector 1128 is provided for electrically connecting the first electrical shield wires 1130 of the first cable 1118 and the second electrical shield wires 1132 of the second cable 1120. This shield connector is attached before the rejacketing sleeve 1102 carrying the heating unit 100 is arranged around the cable connection area. It should be noted, that the arrangement is slightly asymmetric due to the shield connection.

According to this example, the heating unit 100 comprises five adjacent heating elements 102a to 102e. The heating elements 102a to 102e may be energized at different times during the heat shrink installation process. Preferably, the heating element 102c, which is located in the center above the connector 1126, is energized to a high level in a first phase. Thereby, the central region of the outer sleeve 1102 starts contracting towards the inner sleeve 1104. In a next phase, the heating elements 102b and 102d are energized exclusively or in addition to the heating element 102c. Finally, the outermost heating elements 102a and 102e are energized, so that the rejacketing sleeve 1102 seals the connection completely. At this time, the heating elements 102c and also the heating elements 102b and 102d may not be energized or energized at a lower level to create a post-heating or just due to the fact that once the shrink process has started lesser amounts of energy are required to continue the heat shrink installation.

Advantageously, the three-dimensional corrugated shape of the electrical heating unit 100 ensures that the heating unit 100 always remains attached and in thermal contact with the outer sleeve 1102.

Moreover, the idea of locating multiple heating elements 102a to 102e along the length of the outer sleeve 1102 and sequentially energizing them is continued until the end of the rejacketing sleeve. This allows to drive out air and/or avoids enclosing air especially in the electrical interfaces or in the sealing areas of the cable jacket. A comparable effect can be achieved by using overlapping heating elements which create more energy in the overlap areas. So, the shrinking process starts in the overlapping areas.

In summary, for shrinking of heat shrink sleeves using electric energy, a current flow through the electrical conductor wire 106 is used to convert electrical energy into heat. The electrical conductor wires 106 are sandwiched between two polyimide foils. Other carrier foils may also be used, which have a higher thermal conductivity than PI. If the wires are separately covered with an electric insulator, the foils may also be electrically conductive.

The electrical conductor wires are arranged in a meandering pattern. This heater is placed around a heat shrink sleeve so that its uniform distribution prevails on the surface of the heat shrink sleeve. It is important to ensure that there is not too much distance between the beginning of the heater and its end in the wrapped state, otherwise the uniform distribution will no longer exist. On the other hand, there should also be no overlap that is too large, otherwise the heater and thus also the heat shrink sleeve will overheat. Both conditions would lead to incorrect installation or failure of the product. The manufacturing tolerances of the outer diameter for the expansion of the heat shrink sleeve are rather high. This large tolerance cannot be covered by the rigid heater design. It would either lead to a large gap or overheating would occur. To work against this, one would either have to significantly reduce the extrusion speed (cost intensive) or produce several heaters with different dimensions, which are then selected to match the corresponding outer diameter (cost intensive and complicated assembly process). For this reason, the corrugated heater profile was developed. This allows a flexible adaptation of the heater to the outer diameter of the heat shrink sleeves. The heater can be adjusted by stretching or compressing the corresponding circumference of the heat shrink sleeve. The corrugated profile is formed in such a way that the corresponding manufacturing tolerances can be covered and no overheating occurs.

### REFERENCE NUMERALS

| **Reference Numeral** | **Description** |
|---|---|
| 100 | Electrical heating unit |
| 102; 102a-102e | Electrical heating element |
| 104 | Longitudinal axis |
| 106 | Heating wire |
| 108 | Carrier unit |
| 110 | Ridge |
| 112 | Depression; groove |
| 114 | External lead |
| 116 | Supply line |
| 118 | Heat shrink cover |
| 120 | Outer surface of heat shrink cover |
| 122 | Overlap region |
| 124 | First calender roll |
| 126 | Second calender roll |
| 128 | Passing direction of heating unit |
| 130 | Elongated projection |
| 1000 | Cover |
| 1102 | Outer sleeve; rejacketing sleeve |
| 1104 | Inner sleeve; joint body |
| 1108 | Outer surface of the outer sleeve |
| 1112 | Longitudinal middle axis |
| 1114 | Component to be covered |
| 1118 | First cable end |
| 1119 | First cable jacket |
| 1120 | Second cable end |
| 1121 | Second cable jacket |
| 1122 | First main conductor |
| 1124 | Second main conductor |
| 1126 | Electrical connector |
| 1128 | Shield connector |
| 1130 | First shield wires |
| 1132 | Second shield wires |
| 300 | Planar electrical heating unit |
| 302 | Heating wire |
| 304 | Heating wire connector |
| 306 | Heating element |
| 308 | Electrically insulating substrate |
| 310 | Symmetry axis |

## Claims

1. Electrical heating unit for heating a heat shrink cover (118), the electrical heating unit (100) comprising:
an electrical heating element (102) operable to generate heat from electrical input energy, and
a carrier unit (108), on which the electrical heating element (102) is assembled, wherein the carrier unit (108) has a longitudinal axis (104) and is attachable to the heat shrink cover (118),
wherein the carrier unit (108) has a corrugated shape, formed by a plurality of ridges (110) extending along the longitudinal axis (104) of the carrier unit (108).

2. Electrical heating unit according to claim 1, wherein the electrical heating element (102) comprises at least one heating wire (106).

3. Electrical heating unit according to claim 2, wherein the at least one heating wire (106) is formed by an electrical conductor wire, with a diameter between 0.1 mm and 1.0 mm.

4. Electrical heating unit according to one of the preceding claims, wherein the carrier unit (108) comprises a flexible electrically insulating plastic foil, preferably comprising polyimide.

5. Electrical heating unit according to one of the preceding claims, wherein the carrier unit (108) comprises a first electrically insulating sheet and a second electrically insulating sheet stacked on the first electrically insulating sheet, the first and second electrically insulating sheets enclosing the electrical heating element (102).

6. Electrical heating unit according to claim 5, wherein the electrical heating element (102) is at least partly embedded in an adhesive layer.

7. Electrical heating unit according to one of the preceding claims, wherein during operation the electrical heating unit (100) is wrapped around the heat shrink cover (118), forming a cylindrical shape around the longitudinal axis (104).

8. Electrical heating unit according to one of the preceding claims, wherein the ridges (110) are regularly alternating with grooves (112) to form a sinusoidal cross-section.

9. Electrical heating system for heating a heat shrink cover (118), wherein the electrical heating system comprises
an electrical heating unit (100) according to one of the preceding claims, and
an electronic control unit connected to the electrical heating unit (100).

10. Installation system comprising:
an installation kit, the installation kit comprising a heat shrink cover (118) and an electrical heating unit (100) according one of the claims 1 to 8 mounted on the heat shrink cover (118), and
an electronic control unit for controlling said electrical heating unit (100) to provide heat during a heat recovery step for heat-recovering said heat shrink cover (118).

11. Method of fabricating an electrical heating unit (100) for heating a heat shrink cover (118), the method comprising the following steps:
providing a planar flexible precursor of the carrier unit (108), wherein at least one electrical heating element (102) is assembled on the precursor, wherein the carrier unit (108) has a longitudinal axis (104),
deforming the planar flexible precursor carrier unit (108) by applying mechanical pressure, so that the resulting carrier unit (108) has a corrugated shape, formed by a plurality of ridges (110) extending along the longitudinal axis (104) of the carrier unit (108).

12. Method according to claim 11, wherein the step of deforming the carrier unit (108) comprises passing the planar flexible precursor of the carrier unit between a first and a second calender roll (124, 126), which are rotated in opposite directions.

13. Method according to claim 12, wherein each of the calender rolls (124, 126) has a corrugated outer contour with longitudinal ridges and grooves, the ridges of the first calender roll (124) engaging with the grooves of the second calender roll (126) during rotation of the calender rolls (124, 126).

14. Method according to claim 13, wherein each of the calender rolls (124, 126) has an outer contour with a zigzag cross-sectional shape, adjacent sidewalls of the outer contour including angles of between 40° and 140° with each other.

15. Method according to claim 14, wherein after passing through the first and second calender roll (124, 126), the ridges (110) of the electrical heating unit (100) are regularly alternating with grooves (112) to form a sinusoidal cross-section.
